Europäisches Patentamt

European Patent Office

Office européen des brevets

(11) Veröffentlichungsnummer: **0 216 293 B1**

(12) **EUROPÄISCHE PATENTSCHRIFT**

(45) Veröffentlichungstag der Patentschrift: **18.12.91**

(51) Int. Cl.⁵: **G11B 27/02**, G11B 5/55, G11B 20/10

(21) Anmeldenummer: **86112779.3**

(22) Anmeldetag: **16.09.86**

(54) Verfahren zur Aufzeichnung eines Signals auf einem Magnetband.

(30) Priorität: **21.09.85 DE 3533761**

(43) Veröffentlichungstag der Anmeldung:
**01.04.87 Patentblatt 87/14**

(45) Bekanntmachung des Hinweises auf die
Patenterteilung:
**18.12.91 Patentblatt 91/51**

(84) Benannte Vertragsstaaten:
**AT BE CH DE FR GB IT LI LU NL SE**

(56) Entgegenhaltungen:
**EP-A- 0 142 626**
**EP-A- 0 197 333**
**DE-B- 1 449 831**
**DE-B- 2 336 618**
**DE-B- 2 461 868**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Keesen, Werner, Dr.-Ing.**
**Tiestestrasse 5**
**W-3000 Hannover 1(DE)**

Erfinder: **Oberjatzas, Günter, Dipl.-Ing.**
**Langenkampstrasse 42**
**W-3013 Barsinghausen(DE)**
Erfinder: **Hartnack, Wolfgang, Dipl.-Ing.**
**Saarstrasse 22**
**W-3005 Hemmingen 1(DE)**
Erfinder: **Habben, Dieter, Dipl.-Ing.**
**Röntgenstrasse 12**
**W-3000 Hannover 1(DE)**
Erfinder: **Schäfer, Ralf-Dieter, Dipl.-Ing.**
**Im Bultfeld 44**
**W-3005 Hemmingen 4(DE)**
Erfinder: **Peters, Hartmut, Dipl.-Ing.**
**Tiestestrasse 34**
**W-3000 Hannover 1(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

## Beschreibung

Die Erfindung betrifft ein Verfahren zur Aufzeichnung eines Signals auf einem bandförmigen Aufzeichnungsträger, insbesondere für ein Digitalsignal auf einem Magnetband, bei dem jeweils zeitlich aufeinanderfolgende, gegenüber der Länge des Trägers kurze Spurabschnitte auf dem Träger nebeneinander liegen, wobei die Spurabschnitte etwa parallel zur Trägerkante verlaufen und in Querrichtung zur Trägerkante derart nebeneinander liegen, daß die Begrenzungslinien der gebildeten Blöcke von Spurabschnitten senkrecht oder annähernd senkrecht zur Trägerkante gerichtet sind. Ein derartiges Verfahren ist beschrieben in der älteren, nicht vorveröffentlichten EP-A2-0 197 333.

Bei einem derartigen Verfahren bestehen der Wunsch und die Möglichkeit, einzelne Blöcke oder mehrere aufeinanderfolgende Blöcke auf einem beschriebenen Band gezielt neu zu schreiben und dabei die bisher beschriebenen Blöcke löschen. Dieses sogenannte Insert-Verfahren hat z.B. den Zweck, eine fehlerhafte Aufzeichnung zu korrigieren, eine Aufzeichnung durch eine andere Aufzeichnung zu ersetzen oder eine bereits vorhandene Aufzeichnung zu ergänzen z.B. durch einen Vorspann oder Einleitung.

Da die aufeinanderfolgenden Blöcke in Längsrichtung des Magnetbandes hintereinander liegen und ihre Anfänge und Enden jeweils durch Kennsignale markiert sind, ist ein derartiges gezieltes Neuschreiben einer ganzen Anzahl von Blöcken grundsätzlich möglich. Durch Toleranzen bei verschiedenen Parametern wie Z.B. der Dehnung des Bandes, der Längsgeschwindigkeit des Magnetbandes und der Rotationsgeschwindigkeit der Kopftrommel ist jedoch nicht gewährleistet, daß die neu geschriebenen Spuren eines Blockes die gleiche geometrische Länge auf dem Band wie die Spuren des ursprünglich geschriebenen Blockes haben. Dann kann der Fall eintreten, daß ein neu geschriebener Block in die durch das Löschen des ursprünglich geschriebenen Blockes gebildete Lücke nicht hineinpaßt oder diese nicht voll ausfüllt. In beiden Fällen kann es zu Synchronisierstörungen bei der Wiedergabe oder sogar zu einer unerwünschten Löschung von Signalteilen eines Blokkes kommen.

Der Erfindung liegt die Aufgabe zugrunde, das beschriebene Verfahren so weiterzubilden, daß beim Neuschreiben eines Blockes oder mehrerer aufeinander folgender Blöcke die neu geschriebenen Spuren die erforderliche Länge auf dem Band einnehmen.

Diese Aufgabe wird durch die im Anspruch 1 beschriebene Erfindung gelöst. Vorteilhafte Weiterbildungen der Erfindung sind in den Unteransprüchen beschrieben.

Durch die erfindungsgemäße Lösung wird also erreicht, daß beim Neuschreiben eines Blockes die geometrische Länge der auf dem Magnetband geschriebenen Spur etwa gleich der geometrischen Länge der vorher geschriebenen, beim Neuschreiben gelöschten Spur ist. Der neu geschriebene Block oder mehrere aufeinanderfolgende neu geschriebene Blöcke haben dann in erwünschter Weise praktisch die gleich Spurlage und Spurlänge wie die vorher auf dem Band geschriebenen Blökke. Die durch die gelöschten Blöcke gebildete Lükke wird also durch die neu geschriebenen Blöcke genau ausgefüllt, ohne daß dabei störende Lücken oder Überschneidungen auftreten. Der Anfang einer neu geschriebenen Spur orientiert sich dabei an dem Ende der entsprechenden Spur des vorher geschriebenen Blockes und das Ende einer neu geschriebenen Spur an dem Anfang der Spur des folgenden Blockes. Die Spuranfänge und Spurenden sind dabei jeweils durch Anfangsimpulse und Endimpulse markiert.

Zum Ausgleich von Toleranzen ist es dabei notwendig, die geometrische Länge der auf dem Band neu geschriebenen Spur mit einer Regelspannung zu beeinflussen. Hierfür gibt es verschiedene Möglichkeiten.

Die Regelspannung kann auf die Längsgeschwindigkeit des Magnetbandes, also den Vorschub des Magnetbandes in Längsrichtung, einwirken, da diese Geschwindigkeit Einfluß auf die Länge der geschriebenen Spur hat. Wenn z.B. die Richtung der Längsgeschwindigkeit des Magnetbandes und die Rotationsgeschwindigkeit des Kopfrades relativ zum Band im Umschlingungsbereich entgegengesetzt gerichtet sind, bewirkt eine Vergrößerung der Längsgeschwindigkeit eine Vergrößerung der Länge der geschriebenen Spur auf dem Band. Daher kann die Regelspannung auf den Antrieb für die Längsgeschwindigkeit, den sogenannten Capstan, einwirken.

Die Regelspannung kann auch auf die Rotationsgeschwindigkeit des Kopfrades einwirken, da diese ebenfalls auf die Länge der geschriebenen Spur eingeht. Bei einer Erhöhung der Rotationsgeschwindigkeit wird die Länge der geschriebenen Spur bei gleichbleibender Signaldauer länger.

Es ist möglich, mit der Regelspannung die Dauer des geschriebenen Signales zu beeinflussen, so daß dann der jeweils geschriebene Kopf für eine längere Zeit mit dem neu geschriebenen Signal gesteuert wird und somit die Länge der Spur vergrößert wird. Eine derartige Änderung der Dauer eines Signals ist dadurch möglich, daß das Signal mit einer ersten Taktimpulsfolge in einen Speicher eingelesen und mit einer zweiten, von der Regelspannung beeinflußten Taktimpulsfolge aus dem Speicher ausgelesen wird. Die Wirkungsweise eines derartigen Speichers, der auch als FIFO (first-in / first-out) bezeichnet wird, ist näher beschrieben in der älteren Patentanmeldung P 36 26 017. Die beschriebenen Möglichkeiten zur Beeinflussung der geometrischen Länge der neu geschriebenen Spur können je für sich allein oder auch in verschiedenen Kombinationen additiv zur Regelung der Spurlänge verwendet werden.

Die Erfindung wird im folgenden anhand der Zeichnungen erläutert. Darin zeigen

Fig. 1   das Magnetband mit Spuren von drei Blöcken, von denen einer neu geschrieben wird,

Fig. 2   ein Prinzipschaltbild zur Erläuterung der Erzeugung der Regelspannung und

Fig. 3   ein Blockschaltbild zur Durchführung des erfindungsgemäßen Verfahrens.

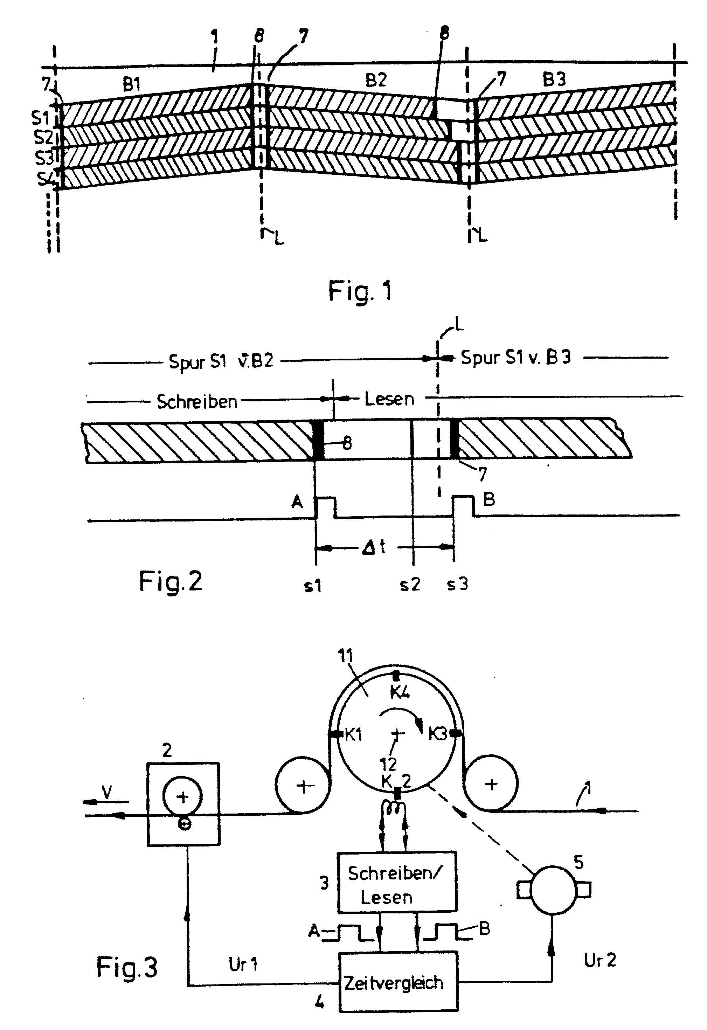

Fig. 1 zeigt das Magnetband 1, auf dem in Längsrichtung des Bandes 1 hintereinander matrixartig Blöcke B1, B2, B3.... jeweils mit parallel zueinander verlaufenden Spuren S1, S2, S3, S4.... geschrieben sind. Die Spuren S sind durch Anfangsimpulse 7 und Endimpulse 8 markiert. Die gestrichelten Linien L bezeichnen Trennlinien jeweils zwischen zwei aufeinanderfolgenden Blöcken. Das Band 1 ist in der beschriebenen Weise mit den Blöcken B beschrieben. Die Spuren S des Blockes B2 sollen durch einen Schreibvorgang zusammen mit einem Löschvorgang neu geschrieben werden. Der Anfang der Spur S1 des Blockes B2 orientiert sich wie bei einem üblichen Schreibvorgang an dem Ende der Spur S1 des Blockes B1. In Fig. 1 ist angenommen, daß durch den neuen Schreibvorgang die Spur S1 des Blockes B2 eine zu kurze geometrische Länge hat, der Endimpuls 8 also zu früh relativ zur Trennlinie L zwischen den Blöcken B2 und B3 liegt. Durch die daraus gewonnene Regelspannung wird die Länge der Spur S2 vergrößert, so daß bei dieser Spur der Endimpuls 8 bereits später liegt. Es ist angenommen, daß in der Spur S3 durch die Regelung die Länge der Spur soweit vergrößert ist, daß der Endimpuls 8 die richtige Lage zur Trennlinie L wie im Block B1 und damit die Spur S3 ihre Soll-Länge hat. Alle übrigen Spuren S des Blockes B2 werden dann mit der richtigen geometrischen Länge geschrieben.

Gemäß Fig. 2 wird am Ende des Schreibvorgangs der Spur S1 vom Block B2 an der Stelle s1 aus dem Endimpuls 8 mit dem Magnetkopf K1 gem. Fig. 3 der Impuls A erzeugt, der somit das Ist-Ende der neu geschriebenen Spur S1 anzeigt. Die geschriebene Spur S1 ist zu kurz. Das soll-Ende der Spur liegt bei s2. Gleichzeitig wird der bisher zum Schreiben der Spur S1 benutzte Kopf K1 auf Lesen umgeschaltet. Da der Kopf K1 gem. Fig. 3 auch über das Ende des Blockes B2 hinaus in Bandkontakt bleibt, liest der Kopf K1 an der Stelle s3 den Anfangsimpuls 7 des aus der vorhandenen Aufzeichnung stammenden Blockes B3 und erzeugt daraufhin den Impuls B an der Stelle s3. Der Abstand $\Delta$ t ist also ein Maß für die Abweichung der Lage des Endes der Spur S1 im Block B2 von der Sollage. Aus dieser Abweichung $\Delta$ t wird die Regelspannung zur Beeinflussung der Länge der Spuren S des Blockes B2 gewonnen.

Fig. 3 zeigt das Magnetband 1, die rotierende Kopftrommel 11 mit vier Köpfen K1, K2, K3,K4 und dem Antrieb 2 für die Längsgeschwindigkeit des Bandes 1. Die Steuereinheit 3 steuert die Schreib- und Lesevorgänge mit den Köpfen K1 bis K4 und erzeugt die Impulse A und B gem. Fig. 2. Die Impulse A und B werden in der Vergleichsstufe 4 mit einander verglichen. Aus der zeitlichen Abweichung $\Delta$ t werden Regelspannungen Ur1 und Ur2 gewonnen. Die Regelspannung Ur1 wirkt auf den Antrieb 2 ein und erhöht die Längsgeschwindigkeit V des Magnetbandes 1 zur Vergrößerung der Länge der geschriebenen Spur. Die Regelspannung Ur2 wirkt auf den Motor 5 ein und vergrößert die Rotationsgeschwindigkeit des Kopfrades 11 ebenfalls zur Vergrößerung der Länge der geschriebenen Spur.

Die beiden Regelungen mit Ur1 und Ur2 können auch je für sich angewendet werden.

Wenn die geschriebene Spur S1 des Blockes B2 Überlänge hat, kann der Fall eintreten, daß der Anfangsimpuls 7 der Spur S1 des Blockes B3 gelöscht wird und somit der Anfang dieser Spur wegen des Fehlens des Anfangsimpulses 7 nicht mehr erkannt werden kann. Deshalb ist es zweckmäßig, die Antriebswerte so auszulegen, daß ohne Einsatz der Regelung die neu geschriebenen Spuren eines Blockes grundsätzlich zu kurz sind und die Regelung immer im Sinne einer Vergrößerung der Spurlänge bis auf den Sollwert wirkt. Dann wird sichergestellt, daß das Ende einer neu geschriebenen Spur jeweils die Trennlinie L nicht überschreiten kann.

**Patentansprüche**

1.   Verfahren zur Aufzeichnung eines Signals, bei dem mit einem rotierenden Kopfrad (11) auf einem Magnetband (1) in Bandrichtung aufeinanderfolgende Blöcke (B) mit parallel zur Bandkante verlaufenden Spuren (S) geschrieben werden, wobei beim Neuschreiben eines Blockes (B2) eines bespielten Bandes (1) der Kopf (K1) am Ende der ersten neu geschriebenen Spur (S) des Blockes (B) auf Lesen umgeschaltet und aus dem Zeitabstand ($\Delta$ t) zwischen dem Ende (8) der neu geschriebenen Spur (S) und dem Beginn (7) der entsprechenden Spur des nächsten Blockes (B3) eine Regelspannung (Ur) für die Länge der nachfolgend neu zu schreibenden Spuren (S) desselben Blockes (B) gewonnen wird.

2. Verfahren nach Anspruch 1, wobei die Regelspannung (Ur1) auf die Längsgeschwindigkeit (V) des Magnetbandes (1) einwirkt.

3. Verfahren nach Anspruch 1 oder 2, wobei die Regelspannung (Ur2) auf die Rotationsgeschwindigkeit des Kopfrades (1) einwirkt.

4. Verfahren nach Anspruch 1,2 oder 3, wobei die Regelspannung (Ur) auf die zeitliche Länge des Signals für die neu zu schreibende Spur (S) einwirkt.

5. Verfahren nach Anspruch 4, wobei das Signal mit einer ersten Taktimpulsfolge in einen Speicher eingelesen und mit einer zweiten Taktimpulsfolge, deren Frequenz von der Regelspannung beeinflußt ist, aus dem Speicher ausgelesen wird.

6. Verfahren nach Anspruch 1, wobei am Ende der neu geschriebenen Spur aus einem das Spurende markierenden Endimpuls (8) ein erster Impuls (A) und zu Beginn der Spur des nächsten Blocks (B3) aus einem den Spuranfang markierenden Anfangsimpuls (7) ein zweiter Impuls (B) abgeleitet und die Regelspannung (Ur) aus dem zeitlichen Abstand ( $\Delta$ t) dieser Impulse (A, B) gewonnen ist.

**Claims**

1. A method of recording a signal, in which successive blocks (B) along the tape with tracks (S) running parallel to the tape edge are written with a rotating head wheel (11) on a magnetic tape (1), in which when rewriting a block (B2) of a played tape (1) the head (K1) is switched over to read at the end of the first rewritten track (S) of the block (B) and from the time interval ( $\Delta$ t) between the end (8) of the rewritten track (S) and the beginning (7) of the corresponding track of the next block (B3) a control voltage (Ur) is obtained for the length of the tracks (S) of the same block (B) which are to be subsequently rewritten.

2. A method according to claim 1, wherein the control voltage (Ur1) acts on the longitudinal speed (V) of the magnetic tape (1).

3. A method according to claim 1 or 2, wherein the control voltage (Ur2) acts on the rotation speed of the head wheel (1).

4. A method according to claim 1, 2 or 3, wherein the control voltage (Ur) acts on the time length of the signal for the track (S) to be rewritten.

5. A method according to claim 4, wherein the signal is read into a store with a first clock pulse train and is read out of the store with a second clock pulse train, the frequency of which is affected by the control voltage.

6. A method according to claim 1, wherein at the end of the rewritten track a first pulse (A) is derived from an end pulse (8) marking the end of the track and at the beginning of the track of the next block (B3) a second pulse (B) is derived from a beginning pulse (7) marking the beginning of the track and the control voltage (Ur) is obtained from the time interval ( $\Delta$ t) between these pulses (A,B).

**Revendications**

1. Procédé pour enregistrer un signal dans lequel des blocs (B) qui se suivent les uns les autres dans le sens de la bande avec des pistes (S) parallèles au bord de la bande sont enregistrés avec une roue des têtes rotative (11) sur une bande magnétique (1), la tête (K1) étant commutée sur lecture, lors du nouvel enregistrement d'un bloc (B2) d'une bande enregistrée (1), à la fin de la première piste (S) nouvellement enregistrée du bloc (B) et qu'une tension de réglage (Ur) pour la longueur des pistes (S) du même bloc (B) qui doivent être nouvellement enregistrées les unes après les autres est obtenue à partir de l'écart temporel (Δt) entre la fin (8) de la piste nouvellement enregistrée (S) et le début (7) de la piste correspondante du bloc suivant (B3).

2. Procédé selon la revendication 1, la tension de réglage (Ur1) agissant sur la vitesse longitudinale (V) de la bande magnétique (1).

3. Procédé selon la revendication 1 ou 3, la tension de réglage (Ur2) agissant sur la vitesse de rotation de la roue des têtes (11).

4. Procédé selon la revendication 1, 2 ou 3, la tension de réglage (Ur) agissant sur la longueur temporelle du signal pour la piste (S) qui doit être à nouveau enregistrée.

5. Procédé selon la revendication 4, le signal étant mis en mémoire avec une première séquence des impulsions de rythme et étant extrait de la mémoire avec une seconde séquence des impulsions de rythme dont la fréquence est influencée par la tension de réglage.

6. Procédé selon la revendication 1, une première impulsion (A) étant dérivée à la fin de la piste nouvellement enregistrée à partir d'une impulsion de fin (8) qui marque la fin de la piste et une seconde impulsion (B) au début de la piste du prochain bloc (B3) à partir d'une impulsion de début (7) qui marque le début de la piste et que la tension de réglage (Ur) est obtenue à partir de l'écart temporel (Δt) de ces impulsions (A, B).

Fig. 1

Fig. 2

Fig. 3